# FASCICULE DE BREVET EUROPEEN

(11) **EP 1 026 909 B1**
(45) Date de publication et mention de la délivrance du brevet: **07.12.2005**
(21) Numéro de dépôt: 00400163.2
(22) Date de dépôt: 21.01.2000
(51) Int. Cl.: H04Q 7/32, H04M 7/00, H04M 1/72

(54) **Téléphone mobile d'un réseau de téléphone cellulaire et de l'Internet**
Mobiltelefon mit Zugriff zu einem zellularen Netz und das Internet
Mobile phone with access to a cellular network and the Internet

(30) Priorité: 02.02.1999 FR 9901160
(43) Date de publication de la demande: 09.08.2000
(73) Titulaire: SAGEM S.A., 75116 Paris (FR)
(72) Inventeur: Alos, Rafael, 95520 Osny (FR)
(74) Mandataire: Bloch, Gérard

(56) Documents cités:
- WO-A-97/14234
- WO-A-98/11703
- WO-A-98/11744

## Description

D'emblée, on notera que par "réseau de téléphonie cellulaire", on entend désigner tout réseau de radiotéléphonie comportant une pluralité de cellules topographiques de stations de base terrestres, par exemple GSM, ou de satellites terrestres.

Un réseau informatique tel que l'Internet permet à des interlocuteurs, et notamment à des porteurs de téléphone mobile d'un réseau cellulaire, de communiquer entre eux et en temps réel.

Pour mettre en communication deux téléphones mobiles d'un réseau cellulaire, par exemple GSM, à travers l'Internet, l'un des deux téléphones, appelant, appelle une première passerelle de communication entre le réseau cellulaire et l'Internet et lui adresse une requête pour communiquer avec l'autre téléphone, appelé. La première passerelle retransmet généralement la requête à une deuxième passerelle, plus proche du téléphone appelé, qui appelle ce dernier à travers le réseau cellulaire pour l'inviter à communiquer à travers l'Internet avec le téléphone appelant. En cas d'acceptation de l'appel, les deux téléphones entament une communication téléphonique à travers l'Internet. Lors de la communication, chaque passerelle convertit le format des données transmises entre les deux téléphones pour les faire transiter de l'un des deux réseaux, Internet et cellulaire, vers l'autre réseau. Les données reçues en mode GSM sont ainsi converties en mode paquets, suivant les protocoles de communication de l'Internet et inversement. Un exemple de ce type de communication est réalisé par le système de téléphonie WAN du document WO 98/11703.

Le coût des communications à travers l'Internet est extrêmement attractif, notamment pour les communications à longue distance. En effet, chaque téléphone, appelé et appelant, ne paie que le coût de la communication téléphonique avec la passerelle.

La solution consistant à utiliser des passerelles de communication entre le réseau cellulaire et l'Internet, pour faire communiquer entre eux deux téléphones mobiles, résout deux difficultés, celle de la mise en communication et celle de la communication des deux téléphones. En effet, les passerelles se chargent, d'une part, d'appeler le téléphone appelé, sur requête du téléphone appelant, et, d'autre part, de convertir le format des données transitant de l'Internet vers le réseau cellulaire et inversement. Les téléphones, appelant et appelé, sont donc des téléphones ordinaires, dépourvus de capacités à communiquer à travers l'Internet.
Ces deux difficultés sont résolues dans WO 98/11703 en utilisant de telles passerelles

La présente invention vise à permettre de faire communiquer des téléphones mobiles à travers l'Internet, et plus généralement à travers un réseau informatique du même type, sans passerelles de communication entre le réseau cellulaire et le réseau informatique.

A cet effet, l'invention concerne in téléphone mobile tel que défini dans la revendication 1.

La présente invention consiste donc à avoir déporté les fonctionnalités de la passerelle dans le téléphone. La demanderesse a en cela vaincu un préjugé de l'homme du métier, selon lequel il n'était pas concevable de faire communiquer des téléphones mobiles à travers un réseau informatique, tel que l'Internet, sans utiliser de passerelle de communication entre le réseau cellulaire et le réseau informatique, notamment en raison des difficultés importantes soulevées par la mise en communication des téléphones à travers ce réseau informatique.

En effet, l'un des inconvénients majeurs d'un réseau informatique résulte du fait que les utilisateurs de ce réseau ne s'y connectent pas en permanence, mais seulement en cas de besoin. Hors connexion, les utilisateurs ne peuvent pas recevoir d'appel pour communiquer à travers le réseau informatique. Il en résulte que, pour faire communiquer deux téléphones mobiles d'un réseau cellulaire, à travers le réseau informatique, l'homme du métier considérait qu'il était obligatoire d'utiliser une passerelle de communication entre le réseau informatique et le réseau cellulaire, pour appeler le téléphone appelé sur requête du téléphone appelant et, par la même occasion, pour faire communiquer les deux téléphones à travers le réseau informatique. La demanderesse est cependant allée à l'encontre de ce préjugé pour proposer un téléphone mobile pouvant communiquer à travers un réseau informatique sans passerelle entre les réseaux informatique et cellulaire.

Les moyens pour communiquer en mode informatique à travers le réseau informatique comprennent des moyens pour comprimer des données à émettre et pour décomprimer des données reçues, suivant un taux de compression/décompression adapté aux débits de données supportés par le réseau informatique.

De préférence, les moyens pour communiquer en mode informatique à travers le réseau informatique comprennent des moyens pour crypter des données à émettre et pour décrypter des données reçues.

Grâce à cela, on sécurise les communications du téléphone mobile à travers le réseau informatique.

Avantageusement encore, il est prévu des moyens de connexion au réseau informatique par connexion téléphonique, à travers le réseau cellulaire, à un fournisseur d'accès au réseau informatique.

Dans une forme de réalisation particulière, le téléphone comprenant des moyens pour émettre des messages par un service de messagerie du réseau cellulaire, il est prévu des moyens pour préparer un message d'appel pour communiquer à travers le réseau informatique, contenant des données d'identification du téléphone émetteur, destiné à être émis vers un téléphone correspondant par le service de messagerie du réseau cellulaire.

De préférence, le téléphone comprenant des moyens pour émettre des messages par un service de messagerie du réseau cellulaire et ayant une adresse informatique sur le réseau informatique, il est prévu des moyens pour préparer un message de notification de ladite adresse informatique, destiné à être émis vers un téléphone correspondant par le service de messagerie du réseau cellulaire.

De préférence encore, le téléphone comprenant des moyens pour recevoir des messages par un service de messagerie du réseau cellulaire, il est prévu des moyens pour détecter, parmi les messages reçus, un message d'appel pour communiquer à travers le réseau informatique.

De préférence enfin, le téléphone comprenant des moyens pour recevoir des messages par un service de messagerie du réseau cellulaire, il est prévu des moyens pour détecter, parmi les messages reçus, un message de notification d'une adresse informatique et en extraire ladite adresse.

L'invention sera mieux comprise à l'aide de la description suivante d'une forme de réalisation particulière du téléphone mobile de l'invention, en référence au dessin annexé sur lequel:

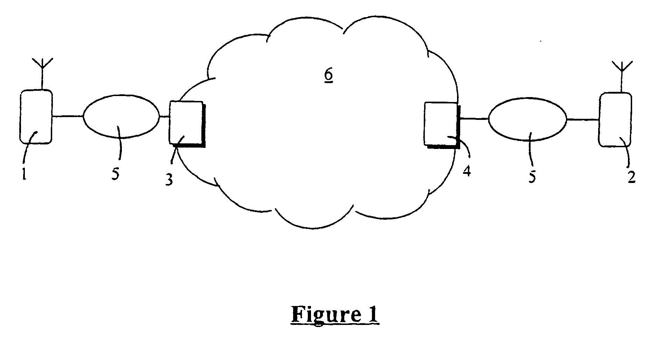

- la figure 1 représente une vue schématique de deux téléphones mobiles d'un réseau cellulaire agencés pour communiquer à travers l'Internet et
- la figure 2 représente un schéma bloc fonctionnel du téléphone mobile de l'invention, selon la forme de réalisation particulière.

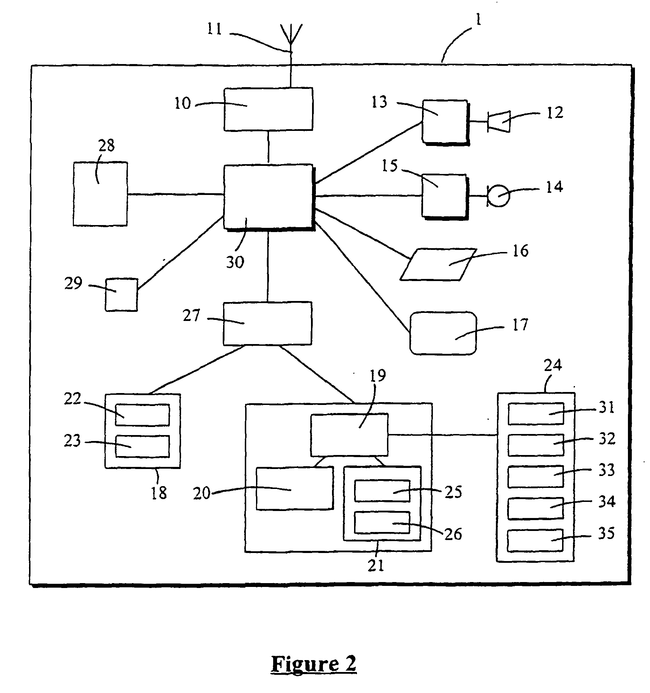

Le téléphone 1, représenté sur la figure 2, est un téléphone mobile agencé pour communiquer, en mode cellulaire ici GSM, à travers un réseau de téléphonie cellulaire GSM 5, et, en mode informatique, à travers un réseau informatique de communication, en l'espèce l'Internet 6. Il dispose d'un numéro d'appel téléphonique et d'un service de message court, plus couramment appelé service SMS (Short Message Service - service de message court), sur le réseau cellulaire 5, ainsi que d'un accès à l'Internet 6, fourni par un fournisseur d'accès 3.

Le service SMS est un service de messagerie du réseau cellulaire 5, permettant aux téléphones mobiles du réseau cellulaire 5 d'émettre et de recevoir des messages courts, que l'on appellera messages SMS par la suite. Ceux-ci sont transmis à travers le réseau cellulaire 5, par le biais du service SMS, entre deux téléphones correspondants, sans établissement d'une communication de circuit entre ces derniers et, par conséquent, à un coût modéré.

L'Internet 6 est un réseau à commutation de paquets. En d'autres termes, les données sont transmises à travers l'Internet 6 en mode paquet, c'est-à-dire sous la forme de paquets de données. Chaque paquet de données contient une adresse informatique de destination sur l'Internet 6. Par "adresse informatique", on entend désigner une adresse sur le réseau informatique Internet 6, plus couramment appelée "adresse IP" (Internet Protocol - Protocole Internet). Ces adresses IP, qui consistent en une succession de chiffres, sont utilisées par l'Internet 6 pour acheminer les paquets de données à destination. Un terminal de communication tel qu'un téléphone mobile, connecté à l'Internet 6, a sa propre adresse IP sur l'Internet 6. Les adresses IP sont soit fixes, ou permanentes, soit dynamiques, ou provisoires, autrement dit attribuées provisoirement aux terminaux par leur fournisseur d'accès à l'Internet 6. Dans l'exemple particulier de la description, le téléphone mobile 1, lorsqu'il est connecté à l'Internet 6, a une adresse IP provisoire.

Le téléphone mobile 1 comprend un bloc 10 d'émission et de réception radio, relié à une antenne radio 11, une interface homme-machine 12-17, 29, et, en mémoire, une application de communication en mode GSM à travers le réseau GSM 5, une application d'établissement d'une communication à travers l'Internet 6, une application de connexion / déconnexion à l'Internet 6 et une application de communication en mode informatique à travers l'Internet 6, respectivement représentées par les blocs fonctionnels 18, 19, 20 et 21.

Le bloc 19 d'établissement d'une communication à travers l'Internet 6 est relié au bloc 20 de connexion / déconnexion à l'Internet 6 et au bloc 21 de communication en mode informatique à travers l'Internet 6.

L'interface homme-machine comprend un haut-parleur 12 relié à un convertisseur numérique / analogique 13, un microphone 14 relié à un convertisseur analogique / numérique 15, un clavier de saisie 16, un écran d'affichage 17 et un "buzzer" 29 d'émission d'une sonnerie d'appel.

Le clavier de saisie 16 comprend
- des touches de numérotation téléphonique,
- un navigateur pour se déplacer dans une arborescence de menus du téléphone mobile 1 et, le cas échéant, sélectionner une commande à exécuter ou un numéro d'appel téléphonique à appeler,
- une touche spécifique d'appel GSM pour émettre ou prendre un appel GSM et permettant ainsi à un utilisateur de commander manuellement une sélection du mode GSM, et
- une touche spécifique d'appel Internet pour émettre ou prendre un appel Internet et permettant ainsi à un utilisateur de commander manuellement une sélection du mode informatique.

Le bloc 18 de communication en mode GSM permet au téléphone mobile 1, de façon classique, de communiquer en mode GSM à travers le réseau GSM 5, suivant un protocole de communication GSM. Le bloc 18 comprend notamment
- un module 22 de compression / décompression destiné, lors d'une communication en mode GSM à travers le réseau GSM 5, en émission, à comprimer les données à émettre en mode GSM suivant un taux de compression compatible avec les débits de données supportés par le réseau GSM 5, ici égal à 13 kbits/seconde, et, en réception, à décomprimer les données reçues, et
- un module 23 d'exécution du protocole de communication GSM.

Le bloc 20 de connexion / déconnexion à l'Internet 6 permet au téléphone mobile 1 de se connecter à l'Internet 6, par connexion téléphonique à travers le réseau cellulaire 5 au fournisseur 3 d'accès à l'Internet 6, suivant un protocole de connexion, et de se déconnecter de l'Internet 6 suivant un protocole de déconnexion.

Le bloc 19 d'établissement d'une communication à travers l'Internet 6 permet d'établir une communication entre le téléphone mobile 1 et un téléphone correspondant à travers l'Internet 6, suivant un protocole, explicité dans la description du fonctionnement du téléphone 1, utilisant le service SMS.

Le bloc 19 est relié à un bloc de messagerie SMS 24 comprenant:
- un module 31 d'émission et de réception de messages SMS par le service SMS du réseau cellulaire 5;
- un module 32 de préparation d'un message SMS d'appel pour communiquer à travers l'Internet 6;
- un module 33 de préparation d'un message SMS de notification d'adresse IP;
- un module 34 de détection, parmi les messages SMS reçus, d'un message SMS d'appel pour communiquer à travers l'Internet 6 et
- un module 35 de détection, parmi les messages SMS reçus, d'un message SMS de notification d'adresse IP et d'extraction de ladite adresse IP.

Un message SMS d'appel contient des données d'identification du téléphone émetteur du message, ou téléphone appelant, et une indication spécifiant que le téléphone mobile récepteur, ou appelé, doit se connecter à l'Internet 6 pour communiquer à travers ce réseau 6 avec le téléphone appelant. Un message SMS de notification d'adresse IP contient des données d'identification et l'adresse IP du téléphone émetteur du message ainsi qu'une indication spécifiant qu'il s'agit d'une notification d'adresse IP.

Le bloc 21 de communication en mode informatique à travers l'Internet 6 comporte un module 25 de compression / décompression et un module 26 de conversion de format. Le module 25 est destiné, lors d'une communication en mode informatique à travers l'Internet 6, en émission, à comprimer les données à émettre suivant un taux de compression compatible avec les débits de données supportés par l'Internet 6, ici légèrement inférieur à 9600 bits/seconde, et, en réception, à décomprimer les données reçues. Le module 26 de conversion de format est destiné, lors d'une communication en mode informatique à travers l'Internet 6, en émission, à décomposer les données à émettre en paquets de données, suivant les protocoles standards, ici TCP et IP, de communication de l'Internet 6, et en réception, à recomposer les données à partir de paquets de données reçus.

Un bloc 27 de sélection de mode est destiné à sélectionner l'un des deux modes, GSM et informatique (ou "mode Internet"). En cas de sélection du mode GSM, le bloc de sélection 27 active le bloc 18 de communication en mode GSM et inhibe, autrement dit rend inactif, le bloc 19 d'établissement d'une communication à travers l'Internet 6 et, par conséquent, le bloc 21 de communication en mode informatique. A l'inverse, en cas de sélection du mode Internet, le bloc de sélection 27 active le bloc 19 d'établissement d'une communication à travers l'Internet 6 et, par conséquent, le bloc 21 de communication en mode informatique et inhibe le bloc 18 de communication en mode GSM.

Le bloc de sélection 27 est agencé pour sélectionner le mode GSM, par défaut, et le mode informatique lorsque l'un des événements suivants se produit:
- appui sur la touche spécifique d'appel Internet,
- sélection d'un numéro d'appel téléphonique de correspondant dans une table 28 de correspondants Internet, explicité ci-après, et
- réception d'un message SMS d'appel pour communiquer à travers l'Internet 6.

Le téléphone 1 comprend en mémoire une table 28 de correspondants Internet, contenant l'identité et le numéro d'appel téléphonique associé d'une pluralité de téléphones correspondants ayant des capacités pour communiquer à travers l'Internet 6, analogues à celles du téléphone mobile 1.

Enfin, tous les éléments du téléphone mobile 1 sont reliés à un bloc central de commande 30, en l'espèce un microprocesseur, destiné à exécuter les applications et à commander le fonctionnement du téléphone 1.

Afin d'illustrer le fonctionnement du téléphone mobile 1, l'établissement d'une communication, à l'initiative du téléphone 1, et la communication entre le téléphone 1 et un téléphone 2, analogue au téléphone 1, vont maintenant être décrits. Par souci de clarté, dans la suite de la description, on appellera téléphone "appelant" et téléphone "appelé", les téléphones 1 et 2, respectivement.

Le téléphone mobile 2 dispose d'un numéro d'appel téléphonique et du service SMS sur le réseau cellulaire GSM 5 et d'un accès à l'Internet 6 fourni par un fournisseur d'accès 4, avec une adresse IP dynamique.

On notera ici que l'identité et le numéro d'appel téléphonique du téléphone mobile 2 sont répertoriés dans la table de correspondants Internet 28 du téléphone mobile 1.

### 1) Etablissement de la communication entre les téléphones mobiles 1 et 2

Pour communiquer à travers l'Internet 6 avec le téléphone 2, l'utilisateur du téléphone appelant 1 sélectionne dans la table de correspondants Internet 28 le numéro d'appel téléphonique du téléphone mobile 2, à l'aide du navigateur de l'interface homme-machine. Le bloc de sélection 27 sélectionne alors, de façon automatique, le mode informatique.

Les étapes suivantes sont effectuées par les téléphones 1 et 2, ici de façon automatique (c'est-à-dire sans intervention d'un utilisateur), sous la commande de leur bloc 19 d'établissement d'une communication à travers l'Internet 6 et à l'aide de leur bloc de messagerie SMS 24 et de leur bloc 20 de connexion / déconnexion à l'Internet 6.

Le téléphone appelant 1 prépare un message SMS d'appel contenant
- des données d'identification du téléphone mobile 1 appelant, ou émetteur, en l'espèce son numéro d'appel téléphonique sur le réseau GSM 5, et
- une indication d'appel spécifiant que le téléphone mobile 2 appelé, ou récepteur, doit se connecter à l'Internet 6 pour communiquer à travers ce réseau 6 avec le téléphone émetteur 1.

Puis le téléphone appelant 1 émet le message SMS d'appel vers le téléphone 2 à travers le réseau cellulaire 5, par le biais du service SMS.

Le message SMS d'appel est reçu par le téléphone appelé 2 qui détecte qu'il s'agit d'un message d'appel, à l'aide de l'indication d'appel. Dans le téléphone 2, le bloc de sélection sélectionne alors, de façon automatique, le mode informatique.

Le téléphone 2 se connecte à l'Internet 6, par connexion téléphonique, à travers le réseau GSM 5, à son fournisseur d'accès 4, et obtient une adresse IP₂ provisoire.

Après avoir obtenu son adresse IP₂, le téléphone appelé 2 prépare un message SMS de notification de son adresse IP contenant
- des données d'identification du téléphone appelé 2, en l'espèce son numéro d'appel téléphonique sur le réseau cellulaire 5,
- l'adresse IP₂ du téléphone appelé 2 et
- une indication spécifiant qu'il s'agit d'un message SMS de notification d'adresse IP.

Le téléphone appelé 2 émet ensuite le message SMS de notification de son adresse IP vers le téléphone appelant 1, en réponse au message d'appel reçu, à travers le réseau cellulaire 5, par le biais du service SMS.

Le message SMS de réponse au message d'appel et de notification de l'adresse IP du téléphone appelé 2 est reçu par le téléphone appelant 1. Celui-ci détecte qu'il s'agit d'un message de notification de l'adresse IP du téléphone appelé, à l'aide de l'indication le spécifiant et des données d'identification, en déduit que le téléphone appelé 2 a accepté l'appel et extrait du message reçu l'adresse IP₂.

Puis, le téléphone appelant 1 se connecte à l'Internet 6, par connexion téléphonique au fournisseur d'accès 3, et obtient ainsi une adresse IP₁ provisoire.

Après connexion à l'Internet 6, le téléphone appelant 1 transmet au téléphone appelé 2, à travers l'Internet 6, un paquet de données contenant
- une adresse de destination, à savoir l'adresse IP₂ du téléphone 2, extraite du message SMS de notification d'adresse IP reçu, et
- une adresse de provenance, à savoir l'adresse IP₁ du téléphone 1.

Le téléphone appelé 2 reçoit le paquet de données et en extrait l'adresse IP₁ du téléphone appelant 1.

Après s'être échangés leurs adresses IP respectives, les téléphones mobiles 1 et 2 peuvent communiquer l'un avec l'autre en temps réel, à travers l'Internet 6. Les téléphones 1 et 2 activent alors chacun leur buzzer 29 afin d'émettre une sonnerie d'appel indiquant à leurs utilisateurs qu'ils peuvent "décrocher", par appui sur la touche d'appel Internet, afin de dialoguer l'un avec l'autre à travers l'Internet 6.

### 2) Communication à travers l'Internet 6 entre les téléphones mobiles 1 et 2

Lors de la communication à travers l'Internet 6, les téléphones 1 et 2 communiquent en mode informatique en s'échangeant des paquets de données, à travers l'Internet 6, suivant les protocoles TCP et IP, par exécution de leur application de communication en mode informatique à travers l'Internet 6.

En émission, chaque téléphone 1 (2) saisit des signaux analogiques de voix, à l'aide du microphone 14. Ces signaux de voix sont numérisés en données vocales par le convertisseur analogique / numérique 15. Les données vocales sont comprimées à l'aide du module de compression / décompression 25, puis décomposées en paquets de données par le module 26 de conversion de format, avant d'être émises par le bloc radio 10 à travers l'Internet 6, par l'intermédiaire du fournisseur d'accès 3.

En réception, chaque téléphone 1 (2) reçoit les paquets de données transmis à travers l'Internet 6, à l'aide du bloc radio 10. Le module 26 de conversion de format recompose les données vocales à partir des paquets reçus. Les données vocales sont ensuite décomprimées par le module de compression / décompression 25 puis transformées en signaux analogiques de voix par le convertisseur numérique / analogique 13. Les signaux de voix sont ensuite diffusés par le haut-parleur 12.

Au lieu de sélectionner le numéro d'appel téléphonique du téléphone 2 dans la table de correspondants Internet 28, l'utilisateur du téléphone 1 peut également le saisir manuellement à l'aide des touches de numérotation du clavier 16 puis appuyer sur la touche spécifique d'appel Internet, en commandant ainsi la sélection du mode informatique. Le téléphone mobile 1 procède alors aux différentes étapes, précédemment explicitées, pour établir une communication à travers l'Internet 6, avec le téléphone 2.

Dans une variante de réalisation du téléphone mobile, côté téléphone appelant, le bloc d'établissement d'une communication à travers l'Internet est agencé pour commander, après l'envoi d'un message SMS d'appel vers un téléphone appelé, la connexion du téléphone appelant à l'Internet 6 puis, après obtention d'une adresse IP par le téléphone appelant, la préparation et l'émission vers le téléphone appelé d'un message SMS de notification de l'adresse IP du téléphone appelant, sans attendre la réception d'un SMS de notification de l'adresse IP du téléphone appelé, envoyé en réponse au message SMS d'appel transmis.

Dans ce cas, lors de l'établissement de la communication entre deux téléphones mobiles à travers l'Internet 6, le téléphone appelant envoie d'abord un message SMS d'appel au téléphone appelé, à travers le réseau cellulaire 5, par le service SMS, comme précédemment explicité. Puis le téléphone appelant se connecte à l'Internet 6, obtient une adresse IP₁ provisoire puis prépare et envoie au téléphone appelé un message SMS contenant son numéro d'appel téléphonique et son adresse IP₁, sans attendre la réception d'un message SMS de notification de l'adresse IP du téléphone appelé. Parallèlement, après réception du message SMS d'appel, le téléphone appelé se connecte à l'Internet 6, obtient une adresse IP₂ puis prépare et envoie au téléphone appelant un message SMS de notification de son adresse IP contenant le numéro d'appel téléphonique et l'adresse IP₂ du téléphone appelé. Les téléphones, appelant et appelé, s'échangent ainsi leurs adresses IP par des messages SMS de notification, à travers le réseau cellulaire.

Dans une forme de réalisation perfectionnée du téléphone mobile de l'invention, le bloc de communication en mode informatique à travers l'Internet 6 comporte, outre le module de compression / décompression et le module de conversion de format, un module de cryptage / décryptage de données, destiné, en émission, à crypter, ou chiffrer, les données à émettre suivant un algorithme de cryptage et à l'aide d'une clé de cryptage, et, en réception, à décrypter, ou déchiffrer, les données reçues à l'aide d'un algorithme de décryptage.

Dans ce cas, lors d'une communication à travers l'Internet 6 entre deux téléphones mobiles selon l'invention, chaque téléphone crypte en émission les données vocales à émettre suivant l'algorithme de cryptage, avant de les comprimer puis de les décomposer en paquets de données qui sont ensuite émis vers l'autre téléphone à travers l'Internet 6. En réception, chaque téléphone recompose les données vocales à partir de paquets de données reçus, décomprime ces données vocales puis les décrypte suivant l'algorithme de décryptage.

Enfin, dans la description qui précède, le bloc d'établissement d'une communication à travers l'Internet 6, le bloc de communication en mode informatique à travers l'Internet 6, le bloc de sélection de mode, le module de préparation d'un message SMS d'appel pour communiquer à travers l'Internet 6, le module de préparation d'un message SMS de notification d'adresse IP, le module de détection, parmi les messages SMS reçus, d'un message SMS d'appel pour communiquer à travers l'Internet 6 et le module de détection, parmi les messages SMS reçus, d'un message SMS de notification d'adresse IP et d'extraction de ladite adresse IP, sont intégrés dans le téléphone mobile. On pourrait également envisager d'intégrer tous ces éléments dans un module externe destiné à être relié au téléphone mobile.

## Revendications

1. Téléphone mobile comprenant des moyens (18) pour communiquer en mode cellulaire à travers un réseau cellulaire (5), **caractérisé par le fait qu'**il comprend des moyens (19) d'établissement d'une communication à travers un réseau informatique (6) à commutation de paquets, des moyens (20, 21) pour communiquer en mode informatique à travers ledit réseau informatique (6), qui comprennent des moyens (26), pour, en émission, décomposer des données à émettre en paquets de données et, en réception, recomposer des données à partir de paquets de données reçus, et des moyens (25), pour comprimer des données à émettre et pour décomprimer des données reçues, suivant un taux de compression/décompression adapté aux débits de données supportées par le réseau informatique, le téléphone comprenant également des moyens (27) de sélection de mode pour sélectionner l'un des deux modes, cellulaire et informatique.

2. Téléphone selon la revendication 1, dans lequel les moyens pour communiquer en mode informatique à travers le réseau informatique (6) comprennent des moyens pour crypter des données à émettre et pour décrypter des données reçues.

3. Téléphone selon l'une des revendications 1 et 2, dans lequel il est prévu des moyens (20) de connexion au réseau informatique (6) par connexion téléphonique, à travers le réseau cellulaire (5), à un fournisseur (3) d'accès au réseau informatique (6).

4. Téléphone selon l'une des revendications 1 à 3, dans lequel il est prévu une table (28) de correspondants du réseau informatique (6) et des moyens (16) pour sélectionner un correspondant à appeler dans ladite table (28), les moyens (27) de sélection de mode étant agencés pour sélectionner le mode informatique, de façon automatique, en cas de sélection d'un correspondant à appeler dans ladite table (28).

5. Téléphone selon l'une des revendications 1 à 4, dans lequel il est prévu des moyens (16) de commande d'utilisateur pour commander la sélection de l'un des deux modes, cellulaire et informatique.

6. Téléphone selon l'une des revendications 1 à 5, dans lequel, le téléphone comprenant des moyens (31) pour émettre des messages par un service de messagerie du réseau cellulaire (5), il est prévu des moyens (32) pour préparer un message d'appel pour communiquer à travers le réseau informatique (6), contenant des données d'identification du téléphone émetteur, destiné à être émis vers un téléphone correspondant par le service de messagerie du réseau cellulaire (5).

7. Téléphone selon l'une des revendications 1 à 6, dans lequel, le téléphone comprenant des moyens (31) pour émettre des messages par un service de messagerie du réseau cellulaire (5) et ayant une adresse informatique sur le réseau informatique (6), il est prévu des moyens (33) pour préparer un message de notification de ladite adresse informatique, destiné à être émis vers un téléphone correspondant par le service de messagerie du réseau cellulaire (5).

8. Téléphone selon l'une des revendications 1 à 7, dans lequel, le téléphone comprenant des moyens (31) pour recevoir des messages par un service de messagerie du réseau cellulaire (5), il est prévu des moyens (34) pour détecter, parmi les messages reçus, un message d'appel pour communiquer à travers le réseau informatique (6).

9. Téléphone selon l'une des revendications 1 à 8, dans lequel, le téléphone comprenant des moyens (31) pour recevoir des messages par un service de messagerie du réseau cellulaire (5), il est prévu des moyens (35) pour détecter, parmi les messages reçus, un message de notification d'une adresse informatique et en extraire ladite adresse.

## Patentansprüche

1. Mobiltelefon mit Mitteln (18), um im zellularen Modus über ein zellulares Netz (5) zu kommunizieren, **dadurch gekennzeichnet, daß** es Mittel (19) zum Aufbau einer Kommunikation über ein paketvermittelndes Computernetz (6) aufweist, Mittel (20, 21) zur Kommunikation im Computermodus über das Computernetz (6), die Mittel (26) aufweisen, um beim Senden zu sendende Daten in Datenpakete aufzuteilen und beim Empfang die Daten ausgehend von empfangenen Datenpaketen wieder zusammenzubauen, und Mittel (25), um zu sendende Daten zu komprimieren und empfangene Daten zu dekomprimieren, und zwar gemäß einem Kompressions-/Dekompressionsverhältnis, das an die von dem Computernetz unterstützten Datenraten angepaßt ist, wobei das Telefon auch Modeauswahlmittel (27) zur Auswahl eines der beiden Modi, zellularer Modus oder Computermodus, aufweist.

2. Telefon nach Anspruch 1, wobei die Mittel zur Kommunikation im Computermodus über das Computernetz (6) Mittel zum Verschlüsseln der zu sendenden Daten und zum Entschlüsseln der empfangenen Daten aufweisen.

3. Telefon nach einem der Ansprüche 1 oder 2, wobei Mittel (20) zur Verbindung mit dem Computernetz (6) mit Hilfe einer Telefonverbindung über das zellulare Netz (5) zu einem Computernetz(6)-Zugangsrechner (3) vorgesehen sind.

4. Telefon nach einem der Ansprüche 1 bis 3, wobei eine Tabelle (28) von Gesprächspartnern des Computernetzes (6) und Mittel (16) vorgesehen sind, um einen anzurufenden Gesprächspartner in der Tabelle (28) auszuwählen, wobei die Modeauswahlmittel (27) so eingerichtet sind, daß sie den Computermodus im Falle der Auswahl eines anzurufenden Gesprächspartners in der Liste (28) automatisch auswählen.

5. Telefon nach einem der Ansprüche 1 bis 4, wobei Benutzersteuermittel (16) zur Steuerung der Auswahl eines der beiden Modi, zellularer Modus oder Computermodus, vorgesehen sind.

6. Telefon nach einem der Ansprüche 1 bis 5, wobei das Telefon Mittel (31) zum Senden von Nachrichten mit Hilfe eines Nachrichtendienstes des zellularen Netzes (5) aufweist und Mittel (32) zum Präparieren einer Daten zur Identifikation des Sendertelefons enthaltenden Anrufnachricht zur Kommunikation über das Computernetz (6) vorgesehen sind, die zur Sendung an ein Gesprächspartner-Telefon mit Hilfe des Nachrichtendienstes des zellularen Netzes (5) vorgesehen ist.

7. Telefon nach einem der Ansprüche 1 bis 6, wobei das Telefon Mittel (31) zum Senden von Nachrichten mit Hilfe eines Nachrichtendienstes des zellularen Netzes (5) aufweist und eine Computeradresse in dem Computernetz (6) hat, und wobei Mittel (33) zum Präparieren einer Nachricht zur Mitteilung dieser Computeradresse vorgesehen sind, die zur Sendung an ein Gesprächspartner-Telefon mit Hilfe des Nachrichtendienstes des zellularen Netzes (5) vorgesehen ist.

8. Telefon nach einem der Ansprüche 1 bis 7, wobei das Telefon Mittel (31) zum Empfang von Nachrichten mit Hilfe eines Nachrichtendienstes des zellularen Netzes (5) aufweist und Mittel (34) vorgesehen sind, um unter den empfangenen Nachrichten eine Anrufnachricht zur Kommunikation über das Computernetz (6) zu erfassen.

9. Telefon nach einem der Ansprüche 1 bis 8, wobei das Telefon Mittel (31) zum Empfang von Nachrichten mit Hilfe eines Nachrichtendienstes des zellularen Netzes (5) aufweist und Mittel (35) vorgesehen sind, um unter den empfangenen Nachrichten eine Nachricht zur Mitteilung einer Computeradresse zu erfassen und daraus die Adresse zu gewinnen.

## Claims

1. Mobile telephone comprising means (18) for communicating in cellular mode through a cellular network (5), **characterised in that** it comprises means (19) for establishing a communication through a packet-switching information network (6), means (20, 21) for communicating in computer mode through said information network (6) which include means (26) for, on transmission, breaking down data to be sent into data packets and, on reception, reconstructing data from received data packets, and means (25) for compressing data to be sent and for decompressing received data, according to a compression/decompression rate adapted to the data rates supported by the computer network, said telephone also including mode selection means (27) for selecting one of the two modes, cellular and computer.

2. Telephone according to claim 1, wherein the means for communicating in computer mode through the computer network (6) comprise means for encrypting data to be sent and for decrypting received data.

3. Telephone according to one of claims 1 and 2; wherein means (20) are provided for connecting to the computer network (6) via a telephone connection, through the cellular network (5), to a computer network (6) access provider (3).

4. Telephone according to one of claims 1 to 3, wherein a table (28) of called parties in the computer network (6) is provided and means (16) for selecting a party to be called from said table (28), the mode selection means (27) being arranged to select automatically the computer mode if a party to be called is selected from said table (28).

5. Telephone according to one of claims 1 to 4, wherein user control means (16) are provided for controlling the selection of one of the two modes, cellular and computer.

6. Telephone according to one of claims 1 to 5, wherein, the telephone comprising means (31) for sending messages via a messaging service of the cellular network (5), means (32) are provided for preparing a call message to communicate through the computer network (6), containing identification data of the transmitting telephone, intended to be sent to a called telephone by the messaging service of the cellular network (5).

7. Telephone according to one of claims 1 to 6, wherein, the telephone comprising means (31) for sending messages via a messaging service of the cellular network (5) and having a computer network address on the computer network (6), means (33) are provided for preparing a message of notification of said computer network address, intended to be sent to a called telephone by the messaging service of the cellular network (5).

8. Telephone according to one of claims 1 to 7, wherein, the telephone comprising means (31) for receiving messages via a messaging service of the cellular network (5), means (34) are provided for detecting, among the received messages, a call message to communicate through the computer network (6).

9. Telephone according to one of claims 1 to 8, wherein, the telephone comprising means (31) for receiving messages via a messaging service of the cellular network (5), means (35) are provided for detecting, among the received messages, a message of notification of a computer network address and for extracting said address from it.
